# EUROPÄISCHE PATENTANMELDUNG

(11) **EP 0 530 670 A1**
(43) Veröffentlichungstag der Anmeldung: **10.03.1993**
(21) Anmeldenummer: 92114578.5
(22) Anmeldetag: 27.08.1992
(51) Int. Cl.: B01D 63/02

(54) **Verfahren zum Herstellen eines Hohlfadenwickelkörpers**

(30) Priorität: 04.09.1991 DE 4129400
(71) Anmelder: Akzo Nobel N.V., NL-6824 BM Arnhem (NL)
(72) Erfinder: Schneider, Klaus, Dr., W-8765 Erlenbach (DE); Wollbeck, Rudolf, W-8765 Erlenbach (DE); Zang, Thomas, W-8758 Goldbach (DE)
(74) Vertreter: Fett, Günter

(57) **Zusammenfassung**

Verfahren zum Herstellen eines Hohlfadenwickelkörpers, bei welchem wenigstens ein Hohlfaden (1) mit einer hin- und herbewegten Fadenführungseinrichtung in mehreren Lagen in Form von Windungen auf einen in Drehung versetzten Körper (4) aufgewickelt wird, so daß die Windungen mit der Längsachse (5) des Körpers (4) einen Winkel bilden, bei welchem die Drehgeschwindigkeit des Körpers (4) und die Changiergeschwindigkeit der Fadenführungseinrichtung so aufeinander abgestimmt werden, daß pro Lage zwischen den Endabschnitten (6; 7) des Körpers (4) eine Vielzahl nebeneinanderliegender erster Windungen (2) gebildet wird, und nach jedem Bilden einer ersten Hohlfadenwindung (2) die Drehgeschwindigkeit des Körpers (4) und/oder die Changiergeschwindigkeit der Fadenführungseinrichtung so verändert wird, daß eine zweite Hohlfadenwindung (3) auf dem ersten oder dem zweiten Endabschnitt (6; 7) des Körpers (4) gebildet wird.

## Beschreibung

Die Erfindung betrifft ein Verfahren zum Herstellen eines Hohlfadenwickelkörpers zum Herstellen eines Hohlfadenmoduls, bei welchem wenigstens ein Hohlfaden mit einer changierenden Fadenführungseinrichtung in mehreren Lagen in Form von Windungen auf einem zylindrischen, rohrförmigen, vielflächigen o.dgl. Körper aufgewickelt wird, wobei die Fadenführungseinrichtung im wesentlichen parallel zur Längsachse des Körpers hin- und herbewegt wird, während der Körper um seine Längsachse gedreht wird, so daß die Windungen mit der Längsachse des Körpers einen Winkel bilden.

Ein solches Verfahren, bei welchem wenigstens ein Hohlfaden zu einer sogenannten Kreuzspule aufgewickelt wird, ist an sich bekannt. Bei diesem bekannten Verfahren wird die Drehzahl des Körpers, z.B. einer Hülse, eines Kernrohres, eines Kerns o.dgl., zwischen den einzelnen Hüben der Fadenführungseinrichtung wie auch die Changiergeschwindigkeit der Fadenführungseinrichtung nicht verändert. Bei diesem Verfahren wird daher pro Hub immer nur eine Hohlfadenlage erzeugt, d.h. nach der Umkehr der Fadenführungseinrichtung in die entgegengesetzte Richtung, also stets die nächste Lage gebildet. Die nach diesem Verfahren hergestellten Hohlfaden-Wickelkörper weisen daher nicht eine Hohlfaden-Packungsdichte auf, wie sie wünschenswert wäre. Außerdem weisen diese Hohlfadenwickelkörper eine inhomogene Aufteilung des die Hohlfäden umgebenden Zwischenraumes auf, der, da Hohlfäden häufig auch als Kapillaren bezeichnet werden, auch extrakapillarer Raum genannt wird. Bei diesen bekannten Hohlfadenwickelkörpern ist der extrakapillare Raum also in sehr unterschiedlich große Zwischenhohlräume zwischen den Hohlfäden aufgeteilt, was zu unerwünschter Kanalbildung (Kanalströmung) und in gewissem Umfang auch zu Kurzschlüssen führen kann. Als weiterer Nachteil kommt hinzu, daß die Länge der Hohlfäden ein Vielfaches der Länge des Hohlfadenwickelkörpers beträgt, was zu hohen Druckverlusten im Hohlfdeninnern (Lumen) führt.

Der vorliegenden Erfindung lag daher die Aufgabe zugrunde, das gattungsgemäße Verfahren so weiterzuentwickeln, daß es möglich ist, mit ihm Wickelkörper herzustellen, die sowohl einen für das jeweilige Verfahren vorherbestimmbaren günstigen Hohlfadenanteil (Packungsdichte oder Modulfüllgrad) als auch ein für den vorgesehenen Anwendungsfall optimale Kapillarlänge sowie eine gleichmmäßigere Aufteilung des die Hohlfäden umgebenden Zwischenraumes aufweisen.

Diese Aufgabe wird bei dem gattungsgemäßen Verfahren dadurch gelöst, daß die Drehgeschwindigkeit (Drehzahl) des zu bewickelnden Körpers und die Changiergeschwindigkeit der Fadenführungseinrichtung so aufeinander abgestimmt werden, daß pro Lage zwischen den Endabschnitten des zu bewickelnden Körpers eine vorher bestimmbare Vielzahl nebeneinanderliegender erster Windungen gebildet wird, die mit der Längsachse des zu bewickelnden Körpers einen Winkel α₁ bilden, und daß einander benachbarte erste Windungen derselben Lage im wesentlichen parallel zueinander und in geringen seitlichen Abständen voneinander und benachbarte erste Windungen aufeinanderfolgender Lagen in einem Kreuzungswinkel 2.α₁ zueinander angeordnet werden, und daß nach jedem Bilden einer ersten Hohlfadenwindung vorübergehend die Drehgeschwindigkeit (Drehzahl) des zu bewickelnden Körpers erhöht und/oder die Changiergeschwindigkeit der Fadenführungseinrichtung - ggf. bis zum Stillstand - verringert wird, um jeweils eine zweite Windung auf dem ersten oder dem zweiten Endabschnitt des zu bewickelnden Körpers zu bilden, die mit der Längsachse des zu bewickelnden Körpers einen Winkel α₂ bildet, der größer als α₁ ist.

Das Verfahren kann mit zu Spulen aufgespulten Hohlfäden aber auch mit frischgesponnenen Hohlfäden durchgeführt werden. Im letzteren Falle wird dann das sonst übliche Aufspulen der Hohlfäden durch das erfindungsgemäße Verfahren ersetzt.

Statt eines Hohlfadens können auch gleichzeitig mehrere Hohlfäden, beispielsweise 5 bis 10 oder mehr, mit Hilfe einer oder mehrerer Fadenführungseinrichtungen zu einem Hohlfadenwickelkörper aufgewickelt werden. Werden zwei oder mehr Hohlfäden mit derselben Fadenführungseinrichtung zugeführt, so werden die Hohlfäden vorzugsweise beispielsweise durch einen kammartigen Fadenführer parallel zueinander und in geringen seitlichen Abständen voneinander gehalten und in dieser Anordnung auf den zu bewickelnden Körper aufgewickelt.

Unter einem zylindrischen, rohrförmigen, vielflächigen o.dgl. Körper wird beispielsweise ein Modulkern oder ein - ggf. perforiertes - Kernrohr im zunächst unbewickelten, hernach im bereits zuvor teilweise bewickelten Zustand, also mit dem bereits zuvor gebildeten Hohlfadenwickelkörper, verstanden. Unter vielflächigem Körper wird dabei ein Körper in Form eines im wesentlichen regelmäßigen Prismas verstanden, ein Körper also, der im Querschnitt die Form eines regelmäßigen Vielecks (Polygons) hat.

Der zunächst unbewickelte Körper kann aus Kunststoff, einem Metall beispielsweise Stahl oder jedem anderen geeigneten Werkstoff bestehen, wobei bei der Auswahl des Werkstoffs ggf. der Wunsch nach Wiederaufarbeitung oder Wiederverwendung des zu bewickelnden Körpers zu berücksichtigen ist. Der zunächst unbewickelte Körper kann einzelne Öffnungen aufweisen oder perforiert sein, um als Zuführ- oder Abführkanal für das die Hohlfäden außen umströmende Fluid zu dienen. Mit dem erfindungsgemäßen Verfahren können Körper mit einem Außendurchmesser von 100 bis 300 mm aber auch darüber und einer Länge von 500 bis 1500 mm aber auch darüber ohne weiteres bewickelt werden.

Das Verfahren gestattet es, beispielsweise abwechselnd eine erste Windung der ersten Lage und eine erste Windung der zweiten Lage zu bilden. Dies geschieht auf folgende Weise: Nach dem Bilden einer ersten Windung der ersten Lage wird eine zweite Windung auf dem ersten Endabschnitt des zu bewickelnden Körpers gebildet, danach eine erste Windung der zweiten Lage, danach eine zweite Windung auf dem zweiten Endabschnitt des zu bewickelnden Körpers, danach wieder eine erste Windung der ersten Lage, die dicht neben der zuvor gebildeten ersten Windung der ersten Lage angeordnet wird, danach wieder eine zweite Windung auf dem ersten Endabschnitt des zu bewickelnden Körpers usw.

Die ersten Windungen des Hohlfadenwickelkörpers sind im wesentlichen der wirksame Teil der Hohlfäden, während die zweiten Windungen, wenn sie später beispielsweise in eine Vergußmasse eingebettet werden, an der Wärme- bzw. Stoffübertragung nicht teilnehmen, mithin den nichtwirksamen Teil der Hohlfäden bilden.

In Ausgestaltung der Erfindung werden die Drehgeschwindigkeit des zu bewickelnden Körpers und die Changiergeschwindigkeit der Fadenführungseinrichtung so aufeinander abgestimmt, daß der Winkel α₁, den die ersten Hohlfadenwindungen mit der Längsachse des zu bewickelnden Körpers bilden im Bereich von 0 bis 45° und der Winkel α₂, den die zweiten Hohlfadenwindungen mit der Längsachse des zu bewickelnden Körpers bilden, im Bereich von 45° bis 90° liegt. Dies bedeutet jedoch nicht, daß einem relativ kleinen Winkel α₁ auch ein relativ kleiner Winkel α₂ bzw. einem relativ großen Winkel α₁ ein relativ großer Winkel α₂ zugeordnet ist, sondern es ist möglich, und ggf. sehr vorteilhaft, die Drehgeschwindigkeit des zu bewickelnden Körpers und die Changiergeschwindigkeit der Fadenführungseinrichtung so aufeinander abzustimmen, daß der Winkel α₁ beispielsweise 5° und der Winkel α₂ 85° bis 90° beträgt.

Die Changiergeschwindigkeit der Fadenführungseinrichtung während des Bildens der ersten Hohlfadenwindungen und/oder während des Bildens der zweiten Hohlfadenwindungen kann im Verlauf des Bewicklungsvorgangs auch allmählich, stufenweise oder kurzzeitig verändert werden, je nachdem ob eine sogenannte Präzisionswicklung, eine sogenannte wilde Wicklung oder eine anders geartete Wicklung gewünscht wird oder ob das Verhältnis aus Drehgeschwindigkeit des zu bewickelnden Körpers und Changiergeschwindigkeit der Fadenführungseinrichtung gezielt gestört werden soll, um unerwünschte Bilderungen im Hohlfadenwickelkörper zu vermeiden. Solche unerwünschten Musterungen auf der Bewicklungsfläche oder den Stirnseiten von Wickelkörpern werden auch als Spiegel und die gezielten Gegenmaßnahmen als Spiegelstörungen bezeichnet.

Um zu vermeiden, daß auf den relativ kurzen Endabschnitten des zu bewickelnden Körpers eine zu starke Materialanhäufung stattfindet, also zu viele zweite Hohlfadenwindungen übereinander angeordnet werden, wird in weiterer Ausgestaltung der Erfindung die Wegstrecke der Fadenführungseinrichtung - auch Hublänge genannt - nach jedem Hub, oder jedem Doppelhub oder einem anderen vorgegebenen Programm geringfügig nach beiden Seiten vergrößert, so daß auf diese Weise zweite Hohlfadenwindungen sowohl übereinander als auch seitlich eng aneinanderliegend angeordnet werden können. Das Bewickeln kann dabei so erfolgen, daß eine jeweils zuvor an einer Stelle abgelegte zweite Hohlfadenwindung von der nachfolgenden zweiten Hohlfadenwindung an dieser Stelle überdeckt und somit in ihrer Lage fixiert wird. Um bei dieser Fahrweise einen Hohlfadenwickelkörper zu erhalten, der auch auf seinen Endabschnitten eine Wicklung mit parallel verlaufenden Außenkonturen aufweist, kann der zu bewickelnde Körper Endabschnitte mit einem zu seinen Stirnenden hin sich verjüngenden Querschnitt aufweisen, Endabschnitte also, deren Querschnittsfläche zu den Stirnenden des Körpers hin kleiner werden, d.h. beispielsweise konisch oder kegelstumpfförmig ausgebildet sind. Die Endabschnitte des zu bewickelnden Körpers können eine solche Form ggf. auch nur in einem Teilbereich, also auf einer Strecke, die kürzer ist als ihre Gesamtlänge, aufweisen.

Die Haftung der Hohlfadenwindungen auf dem zunächst noch unbewickelten Körper kann durch die Verwendung von Kontaktklebern, Klebebändern u.dgl. unterstützt werden. Dies gilt insbesondere für die Stellen auf den Endabschnitten des zu bewickelnden Körpers, an denen eine erste Windung in eine zweite Windung bzw. eine zweite Windung in eine erste Windung übergeht, den Stellen also, an denen eine plötzliche Änderung des Winkels α stattfindet. Zur Verbesserung der Haftung der jeweils zuletzt abgelegten Hohlfadenwindung auf dem Hohlfadenwickelkörper, besonders an den Übergangsstellen von einer ersten Windung auf eine zweite Windung bzw. einer zweiten Windung auf eine erste Windung, kann ein Kontaktkleber, ein Reaktionsharz, ein thermisch oder durch Ultraschall erzeugter Schweißpunkt o.dgl. aufgebracht werden, um somit die Hohlfadenwindungen an ihren Berührungspunkten (Kreuzungspunkten) miteinander zu verbinden.

Das Verfahren wurde so durchgeführt, daß der Drehsinn des zu bewickelnden Körpers während des gesamten Bewicklungsvorgangs, also bis zur Fertigstellung des Hohlfadenwickelkörpers beibehalten wurde, d.h., daß eine Umkehr der Drehrichtung zu keinem Zeitpunkt erfolgte.

Aus dem erfindungsgemäß hergestellten Hohlfadenwickelkörper kann ein Hohlfadenmodul zur Wärme- und/oder Stoffübertragung hergestellt werden, je nachdem welche Hohlfäden verwendet werden. Zur Wärmeübertragung werden in der Regel Hohlfäden mit einer nichtporösen, fluidundurchlässigen Wand eingesetzt, zur Stoffübertragüng können Hohlfäden mit einer porösen, einer mikroporösen, einer semipermeablen, einer selektiv durchlässig wirkenden, also einer Membraneigenschaften aufweisenden, Wand u. dgl. verwendet werden.

Die Herstellung eines Hohlfadenmoduls aus einem erfindungsgemäß hergestellten Hohlfadenwickelkörper kann in bekannter Weise beispielsweise dadurch erfolgen, daß die Endbereiche der Hohlfäden, die die Endabschnitte des Hohlfadenwickelkörpers bilden, also im wesentlichen die zweiten Windungen, in eine aushärtbare Vergußmasse eingebettet werden, die Vergußmasse erhärtet gelassen wird und danach ein Teil des auf diese Weise an jedem Ende des Hohlfadenwickelkörpers gebildeten Vergußmassekörpers teilweise abgetragen wird, um den durchgehenden Innenhohlraum der Hohlfäden (Lumen) freizulegen. Es ist aber auch möglich, die Hohlfäden nur an einem Ende des Hohlfadenwickelkörpers zu öffnen oder überhaupt nur an einem Ende einzubetten. Die auf diese oder andere Weise hergestellten Hohlfadenmodule können dann in bekannter Weise mit den erforderlichen Dichtungen in entsprechend bemessene Gehäuse eingebaut werden, die die Anschlüsse für das Zu- und Abführen der zur Wärme- bzw. Stoffübertragung vorgesehenen gasförmigen, dampfförmigen und/oder flüssigen Stoffe (Fluide) aufweisen. Solche Vorrichtungen sind hinreichend bekannt und werden daher hier nicht näher beschrieben.

Das erfindungsgemäße Verfahren ist ganz besonders zum Herstellen von Hohlfadenwickelkörpern geeignet, die zum Herstellen von Hohlfadenmodulen zur Gastrennung vorgesehen sind. Für die Gastrennung geeignete Hohlfäden weisen beispielsweise einen Außendurchmesser von 200 bis 300 µm auf, können nach einem Trocken- oder Naßspinnverfahren hergestellt werden und können anschließend auch noch einem Beschichtungsverfahren unterworfen werden. Werden die Geschwindigkeiten für das Herstellen der Hohlfäden, das Beschichten der Hohlfäden und das Herstellen von Hohlfadenwickelkörpern aufeinander abgestimmt, so können alle drei Verfahrensschritte ohne Unterbrechung nacheinander durchgeführt werden, d.h. das Herstellen der Hohlfadenwickelkörper erfolgt dann mit frisch gesponnenen frisch beschichteten Hohlfäden, wobei Produktions- und Verarbeitungsgeschwindigkeiten von 5 bis 40 m/min ohne Schwierigkeiten erreicht werden.

In weiterer Ausgestaltung des erfindungsgemäßen Verfahrens kann während des Herstellens eines Hohlfadenwickelkörpers wenigstens einmal während einer Drehung des zu bewickelnden Körpers von wenigstens 360° ein Stück Folie o.dgl., das sich in Längsrichtung des Hohlfadenwickelkörpers von einem Endabschnitt bis kurz vor den anderen Endabschnitt erstreckt, zuführt werden, so daß die Folie in dem genannten Bereich den bereits zuvor gebildeten Hohlfadenwickelkörper um wenigstens 360° umschließt. Dies kann beispielsweise erfolgen, wenn die Hälfte der aufzuwickelnden Hohlfadenlänge zu einem Hohlfadenwickelkörper aufgewickelt ist, oder wenn die Hälfte der insgesamt vorgesehenen Hohlfadenlagen, d.h. also die Hälfte der vorgesehenen Dicke des Hohlfadenwickelkörpers, in radialer Richtung gemessen, erreicht ist. Dies gilt sinngemäß auch für den Fall, daß mehr als nur eine Folie in der oben beschriebenen Weise zugeführt wird. Diese wenigstens eine Folienzwischenlage in dem Hohlfadenwickelkörper kann beim späteren Einbetten der Endbereiche der Hohlfäden in eine aushärtbare Vergußmasse an seiner einen Seite mit eingebettet werden. Es bewirkt dann eine Unterteilung des die Hohlfäden umgebenden Raumes und wirkt bei entsprechender Anordnung der Zu- und Abführöffnung(en) für das die Hohlfäden umströmende Fluid wie ein Leitblech, durch welches dieses zunächst in Längsrichtung durch einen Teil der Hohlfadenlagen geleitet, danach umgelenkt und in entgegengesetzter Richtung durch die anderen Hohlfadenlagen geleitet wird.

Bei dieser Ausgestaltung des erfindungsgemäßen Verfahrens ist es auch möglich, nach dem Zuführen der Folie(n) eine andere Hohlfadentype zuzuführen als zuvor, beispielsweise mit anderen Trenneigenschaften, einer anderen Trennleistung o.dgl.

Während des Bewickelns des zu bewickelnden Körpers können durch Auftragen beispielsweise eines Reaktionsharzes oder Klebers über die Länge des Hohlfadenwickelkörpers verteilt ringförmige Elemente gebildet werden, die sich nicht über die gesamte Dicke des Hohlfadenwickelkörpers, in radialer Richtung gemessen, erstrecken, welche später als Umlenkeinrichtungen (Umlenkbleche) für das die Hohlfäden umströmende Fluid dienen, wodurch - bezogen auf das die Hohlfäden durchströmende Fluid - ein Kreuz-Gleich- oder Kreuz-Gegen-Strom erreicht wird.

In ähnlicher Weise, wie zuvor beschrieben, ist es auch möglich, das Einbetten der Endabschnitte des Hohlfadenwickelkörpers durch Aufbringen der Einbettmasse schon während des Wickelvorgangs durchzuführen.

Darüberhinaus kann während des Herstellens eines Hohlfadenwickelkörpers der Winkel α₁, den die ersten Windungen mit der Längsachse des zu bewickelnden Körpers bilden, kontinuierlich oder stufenweise oder auch nur einmal verändert werden, so daß innerhalb des Hohlfadenwickelkörpers ein unterschiedlicher Füllgrad, also eine unterschiedliche Hohlfadendichte erreicht wird. Ebenso kann eine Veränderung des Winkels α₂ wahrend des Wickelvorgangs von Vorteil sein.

Der fertige Hohlfadenwickelkörper oder der daraus hergestellte Hohlfadenmodul kann mit einer Folie oder einem eng anliegenden Rohr umgeben werden, um unerwünschte Blindströme durch Kanalbildung zu vermeiden. Ebenso kann der Mantel des Gehäuses, in den der Hohlfadenmodul, wie oben bereits beschrieben, eingebaut wird, wo bemessen sein, daß er den Hohlfadenmodul eng umschließt. Zum Schutze des Hohlfadenmoduls kann dieser auch mit einem Schutzgitter oder Schutzrohr, welches Einlaß- bzw. Auslaßöffnungen für das die Hohlfäden umströmende Fluid aufweist, ummantelt sein.

Sollen die Hohlfäden in radialer Richtung des Hohlfadenmoduls, also im wesentlichen senkrecht zu ihrer Längsachse umströmt werden, so wird als zu bewickelnder Körper ein perforiertes oder poröses fluiddurchlässiges Kernrohr verwendet. Sollen die Hohlfäden des Hohlfadenmoduls dagegen in Längsrichtung umströmt werden, so wird als zu bewickelnder Körper ein massiver Kern oder ein Kernrohr mit fluidundurchlässiger Wand o.dgl. verwendet. Alle diese Mittel und ihre Wirkungsweise in entsprechenden Einrichtungen sind an sich bekannt und werden daher hier nicht näher erläutert.

Bei der Verwendung von Modulen, die aus erfindungsgemäß hergestellten Hohlfadenwickelkörpern gefertigt wurden, zur Gastrennung (Gasseparation) hat sich das Umströmen der Hohlfäden mit dem aufzutrennenden Gasgemisch, beispielsweise Luft, in Längsrichtung, und zwar im Gegenstrom zu dem durch die Hohlfäden strömenden abgetrennten Gas(gemisch) als vorteilhaft erwiesen. Hierbei brauchen die Hohlfäden, wie oben bereits beschrieben, nur an einer Seite geöffnet zu sein, wobei aber auch die nicht geöffneten Endbereiche der Hohlfäden am anderen Ende des Hohlfadenmoduls eigebettet sein können, um einen stabilen maßhaltigen Hohlfadenmodul zu haben. Die Form der Hohlfäden ist dabei der U- bzw. Haarnadelform vergleichbar.

Die Erfindung wird nachfolgend anhand der Figuren näher erläutert.

Es zeigen in teilweise vereinfachter schematischer Darstellungsweise:
- Figur 1: den Bewicklungsvorgang in einer Ausgestaltungsform des Verfahrens,
- Figur 2: eine Gastrennvorrichtung,
- Figur 3: eine Gastrennvorrichtung mit einem Hohfadenmodul hergestellt aus einem nach einer Ausgestaltungsform des Verfahrens hergestellten Wickelkörper,
- Figur 4: eine Gastrennvorrichtung mit einem Hohfadenmodul hergestellt aus einem nach einer weiteren Ausgestaltungsform des Verfahrens hergestellten Wickelkörper,
- Figur 5: eine Vorrichtung zur Gastrennung, Filterung o.dgl.

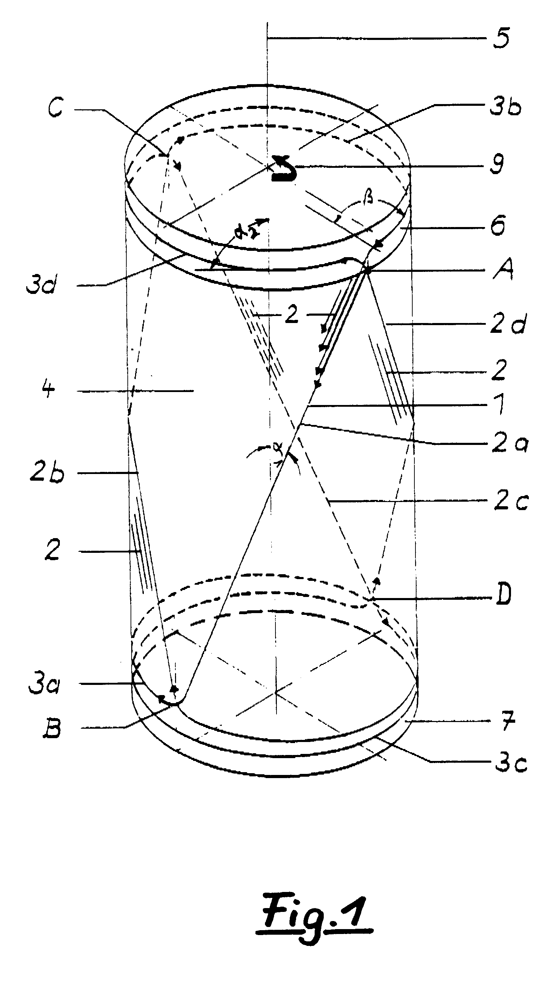

In Figur 1 wird eine Ausführungsform des Verfahrens verdeutlicht, bei welcher nacheinander vier erste Hohlfadenwindungen 2a bis 2d eines Hohlfadenwickelkörpers, danach nacheinander weitere erste Hohlfadenwindungen 2, die jeweils im wesentlichen parallel zu und in einem geringen seitlichen Abstand von den zuvor gebildeten benachbarten ersten Windungen 2a bis 2d angeordnet sind, gebildet werden und so fort. Beginnend beim Punkt A auf dem ersten Endabschnitt 6 des zu bewickelnden Körpers 4 wird während einer Drehung des zu bewickelnden Körpers 4 um ca. 90° um seine Längsachse 5 in der durch den Pfeil 9 dargestellten Drehrichtung ein Hohlfaden 1 mit einer nicht dargestellten changierenden Fadenführungseinrichtung zum Punkt B auf dem zweiten Endabschnitt 7 des Körpers 4 verlegt, wodurch eine erste Windung 2a gebildet wird, die mit der Längsachse 5 des Körpers 4 den Winkel α₁ bildet. Danach wird die Drehgeschwindigkeit (Drehzahl) des Körpers 4 erhöht, während die Changiergeschwindigkeit der nicht dargestellten Fadenführungseinrichtung auf Null gebracht wird, bis nach einer Drehung des Körpers 4 um ca. 360° wieder der Punkt B auf dem zweiten Endabschnitt 7 des Körpers 4 erreicht ist. Auf diese Weise wird die zweite Hohlfadenwindung 3a gebildet. Nach Erreichen des Punktes B wird die Drehzahl des Körpers 4 wieder verringert und die Fadenführungseinrichtung vom zweiten Endabschnitt 7 des Körpers 4 zum ersten Endabschnitt 6 des Körpers 4 zurückbewegt, bis nach einer Drehung des Körpers 4 um ca. 90° der Punkt C erreicht ist, wodurch die nächste erste Windung 2b gebildet wird, wobei der Drehsinn der ersten Hohlfadenwindung 2b dem Drehsinn der ersten Hohlfadenwindung 2a entgegengesetzt ist. Hiernach wird die Drehzahl des Körpers 4 wiederum während einer Drehung um ca. 360° erhöht und die Changiergeschwindigkeit der Fadenführungseinrichtung bis zum Stillstand verringert bis wieder der Punkt C auf dem ersten Endabschnitt 6 erreicht ist und eine weitere zweite Hohlfadenwindung 3b gebildet wurde, welche mit der Längsachse 5 des Körpers 4 den Winkel α₂ bildet, der in diesem Falle im wesentlichen 90° beträgt und damit größer ist als der Winkel a₁. Von Punkt C bis zum Punkt D wird während einer 90°-Drehung des Körpers 4 die Windung 2c gebildet. Nach Erreichen des Punktes D wird die Drehzahl des Körpers 4 wieder erhöht und während einer Drehung des Körpers 4 um ca. 360° bei stillstehender Fadenführungseinrichtung die Windung 3 c erzeugt. Der Drehsinn der ersten Hohlfadenwindung 2c und der ersten Hohlfadenwindung 2a sind gleich. Die Hohlfadenablage von D nach A während einer 90°-Drehung des Körpers 4 und changierender Fadenführungseinrichtung vom Endabschnitt 7 zu Endabschnitt 6 erzeugt die Hohlfadenwindung 2d. Nach Erreichen des Punktes A wird die Fadenführungseinrichtung wieder angehalten und die Drehzahl des Körpers 4 während einer Drehung um beispielsweise ca. 359° oder 361° erhöht, bis ein Punkt auf den ersten Endabschnitt 6 des Körpers 4 erreicht ist, der in der Abbildung 1 in einem geringen Abstand links, wie gezeichnet, oder rechts vom Ausgangspunkt A liegt, woraufhin der oben beschriebene Verfahrensablauf erneut beginnt, so daß nunmehr alle nachfolgend gebildeten ersten Hohlfadenwindungen 2 im wesentlichen parallel zu und in einem geringen seitlichen Abstand von den jeweils zuvor gebildeten unmittelbar benachbarten ersten Windungen 2a bzw. 2b bzw. 2c bzw. 2d angeordnet werden. Dieser Verfahrensablauf kann so oft wiederholt werden, bis die gewünschte Dicke des auf diese Weise gebildeten Hohlfadenwickelkörpers erreicht ist. In dem Hohlfadenwickelkörper werden - von innen nach außen betrachtet - gebildet: Eine erste Lage bestehend aus den ersten Hohlfadenwindungen 2a, eine zweite Lage bestehend aus den ersten Hohlfadenwindungen 2b, welche mit den ersten Hohlfadenwindungen 2a den Kreuzungswinkel 2.α₁ bilden, danach eine dritte Lage, die von den ersten Hohlfadenwindungen 2c gebildet wird, die mit den ersten Hohlfadenwindungen 2b einen Kreuzungswinkel 2.α₁ bilden, und eine vierte Lage, die von den ersten Hohlfadenwindungen 2d gebildet wird, die mit den ersten Hohlfadenwindungen 2c ebenfalls einen Kreuzungswinkel 2.α₁ bilden. Danach folgt wieder eine Lage aus ersten Hohlfadenwindungen 2a usw.

Bei dem zuvor beschriebenen Verfahrensablauf wird der zu bewickelnde Körper 4 um etwas mehr als 3 mal 360° um seine Längsachse 5 gedreht, bevor eine weitere erste Hohlfadenwindung 2a gebildet wird, nämlich während des Bildens der ersten Hohlfadenwindungen 2a bis 2d um jeweils ca. 90°, insgesamt also um 4 mal ca. 90°, und während des Bildens der zweiten Hohlfadenwindungen 3a bis 3d um jeweils ca. 360°, insgesamt also 5 mal um ca. 360°, wobei die letzte Drehung des Körpers 4 bei der Bildung der zweiten Hohlfadenwindung 3d um etwas mehr oder weniger als 360°, beispielsweise 359° oder 361°, erfolgt, damit - wie oben bereits beschrieben - alle nachfolgenden ersten Windungen 2 in einem geringen seitlichen Abstand von dem jeweils zuvor gebildeten benachbarten ersten Windungen auf dem Körper 4 angeordnet werden.

Natürlich ist es durch weitere Ausgestaltungen des Verfahrens möglich, bei einer anderen Abstimmung der Changiergeschwindigkeit der Fadenführungseinrichtung und der Drehgeschwindigkeit (Drehzahl) des Körpers 4 beim Bilden der ersten Hohlfadenwindungen 2, bei einer anderen Drehdauer des Körpers 4 und/oder Dauer der reduzierten Changiergeschwindigkeit der Fadenführungseinrichtung während des Bildens der zweiten Hohlfadenwindungen 3 auf den Endabschnitten 6 bzw. 7 des Körpers 4 eine andere Anzahl von Lagen, andere Winkel α₁ und/oder α₂ usw. zu erhalten.

In gleicher Weise, d.h. mit der gleichen Schrittfolge, kann ein Hohlfadenwickelkörper hergestellt werden, indem statt der Drehung des Körpers 4 um jeweils 360° (361° bzw. 359°) nur eine Drehung derselben um jeweils 180° (181° bzw. 179°) bewirkt wird. Bei dieser Variante wird weniger Hohlfadenmaterial verbraucht, da weniger Material auf den Endabschnitten 6; 7 aufgewickelt wird. Hierbei müssen jedoch die ca. 180° messenden zweiten Hohlfadenwindungen auf den Endabschnitten vorübergehend oder bleibend fixiert werden, beispielsweise durch mechanische Haltemittel, einen Kleber o.dgl., um ein Abrutschen derselben zu vermeiden.

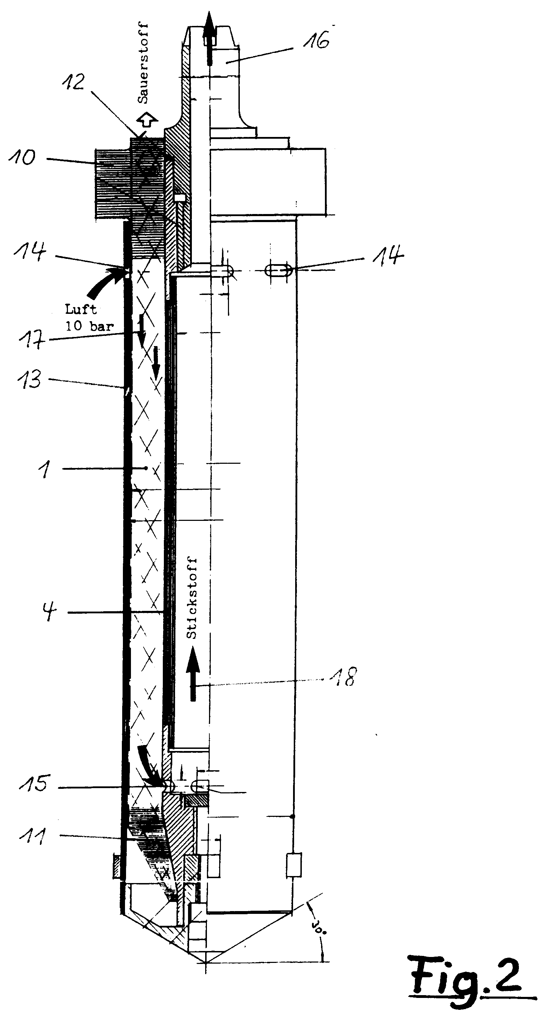

Figur 2 zeigt in teilweise geschnittener Darstellungsweise eine Vorrichtung zum Trennen von Luft in ein sauerstoffreiches und ein stickstoffreiches Gasgemisch. Die Vorrichtung besteht im wesentlichen aus einem Hohlfadenmodul, der aus einem erfindungsgemäß hergestellten Hohlfadenwickelkörper hergestellt wurde. Der Hohlfadenmodul besteht aus den erfindungsgemäß in mehreren Lagen in Form von Windungen auf dem Kernrohr 4 angeordneten Hohlfäden 1, deren Endbereiche, die die Endabschnitte des erfindungsgemäß hergestellten Hohlfadenwickelkörpers bilden, also im wesentlichen die zweiten Windungen, in den beiden Vergußmassekörpern 10 und 11 eingebettet sind. Bei dieser Ausführungsform sind die Hohlfäden 1 nur am oberen Ende des Hohlfadenmoduls, also an der Stirnfläche 12 des oberen Vergußmassekörpers 10 geöffnet. Das Mantelrohr 13 weist in seinem oberen Bereich Eintrittsöffnungen 14 für das zu trennende Gasgemisch, im vorliegenden Beispiel Luft, auf. Das Kernrohr 4 weist an seinem unteren Ende Öffnungen 15 auf, die eine Verbindung zwischen dem extrakapillaren Raum des Hohlfadenwickelkörpers und dem Innern des Kernrohrs 4 herstellen. An ihrem oberen Ende weist die Gastrennvorrichtung den Austrittsstutzen 16 mit einer Austrittsöffnung (s. Pfeil) für das aus dem Innern des Kernrohrs 4 austretende Gas(gemisch) auf. Die in Figur 2 dargestellte Gastrennvorrichtung kann wie üblich unter Verwendung von Dichtungen o.dgl. in ein entsprechend bemessenes Gehäuse eingebaut werden, das die Anschlüsse für das Zu- und Abführen der Gasgemische aufweist. Die in Figur 2 dargestellte Gastrennvorrichtung arbeitet wie folgt: Das zu trennende Gasgemisch, im vorliegenden Beispiel also Luft, wird unter einem Druck von beispielsweise 10 bar durch die Eintrittsöffnungen 14 in den extrakapillaren Raum des Hohlfadenwickelkörpers geleitet, strömt dort von oben nach unten, wie durch die Pfeile 17 dargestellt und umströmt dabei die Hohlfäden 1, also die Außenseite der Hohlfäden 1. Dabei tritt bevorzugt Sauerstoff durch die Wand der Hohlfäden 1 in den inneren Hohlraum (Lumen) der Hohlfäden 1, und das auf diese Weise gebildete sauerstoffreiche Gasgemisch strömt durch den Innenhohlraum (Lumen) der Hohlfäden 1 in entgegengesetzter Richtung, also von unten nach oben, und tritt an den offenen Enden der Hohlfäden 1, also an der Stirnfläche 12 des oberen Vergußmassekörpers 10, aus und kann dort gesammelt und abgeführt werden. Das an Sauerstoff verarmte Gasgemisch (Luft), also das stickstoffreiche Gasgemisch, tritt durch die Öffnungen 15 (s. Pfeil) in das Kernrohr 4, strömt darin von unten nach oben wie durch den Pfeil 18 angedeutet und tritt durch die Austrittsöffnung (s. Pfeil) im Stutzen 16 aus der Gastrennvorrichtung aus. Bei dieser Fahrweise strömt das an Sauerstoff verarmende Gasgemisch (Feed-Gas) und das sauerstoffreiche Gasgemisch (Permeat) im Gegenstrom. Die Strömungsrichtung des stickstoffreichen Gasgemisches (Retentat) ist hierbei ohne Bedeutung, da im Innern des Kernrohrs 4 ein weiterer Stoffaustausch nicht mehr stattfindet. Der Austrittsstutzen 16 könnte also genausogut auch am unteren Ende der Gastrennvorrichtung angeordnet sein.

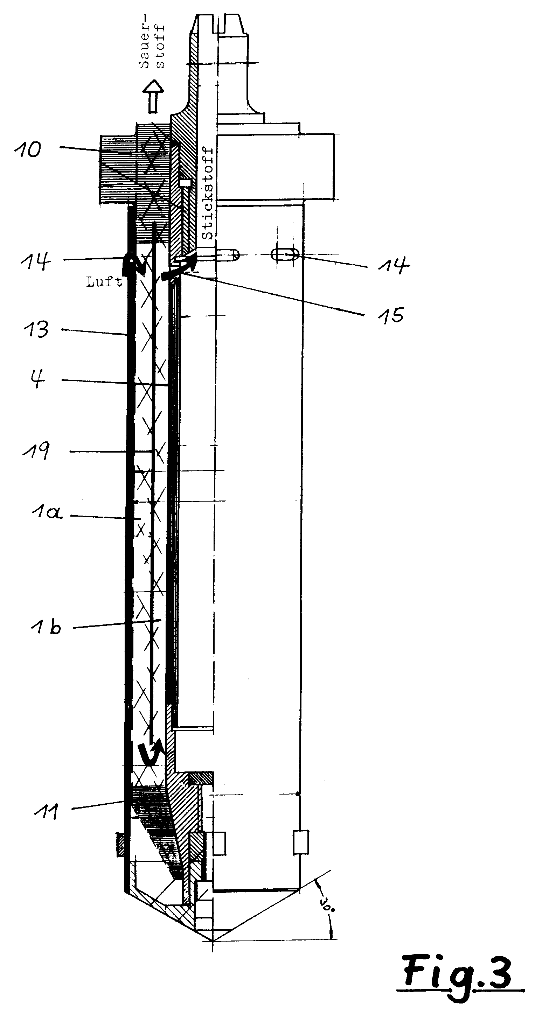

Figur 3 zeigt in teilweise geschnittener Darstellungsweise eine Gastrennvorrichtung mit einem Hohlfadenmodul, der aus einem Wickelkörper hergestellt wurde, der nach einer Ausgestaltungsform des Verfahrens hergestellt wurde. Die Vorrichtung weist im übrigen im wesentlichen dieselben Teile auf wie die in Figur 2 dargestellte mit Ausnahme derjenigen Teile auf die nachfolgend besonders hingewiesen wird und die besonders beschrieben werden. Die in Figur 3 dargestellte Gastrennvorrichtung weist eine vom oberen Vergußmassekörper 10 bis nicht ganz zum unteren Vergußmasskörper 11 hin sich erstreckende Trennwand 19 auf, die als Leitblech bzw. Umlenkblech wirkt. Eine solche Trennwand 19 kann insbesondere dadurch erhalten werden, daß während des Herstellens des Hohlfadenwickelkörpers während einer Drehung des Kernrohrs 4 von wenigstens 360° ein Stück Folie o.dgl. zugeführt und um den bereits zuvor gebildeten Hohlfadenwickelkörpers herumgewickelt wird, so daß sie diesen also um wenigstens 360° umschließt. Das durch die Eintrittsöffnungen 14 zugeführte in den extrakapillaren Raum des Hohlfadenwickelkörpers eintretende Gasgemisch wird durch die Trennwand 19 zunächst an den außenliegenden Hohlfäden 1a des Hohlfadenwickelkörpers entlanggeführt und strömt dabei bei der in Figur 3 gewählten Darstellung von oben nach unten. Am unteren Ende der Trennwand 19 wird der Gasstrom umgelenkt (s. Pfeil) und strömt dann in entgegengesetzter Richtung, also von unten nach oben, an den innenliegenden Hohlfäden 1b des Hohlfadenwickelkörpers entlang. Die Durchtrittsöffnungen 15, die den extrakapillaren Raum mit dem Innern des Kernrohrs 4 verbinden und durch welche das Retentat in das Kernrohrinnere strömen kann (s. Pfeil), sind bei dieser Ausführungsform am oberen Ende des Kernrohrs 4, also in der Nähe des oberen Vergußmassekörpers 10 angeordnet. Im übrigen ist diese Ausführungsform der Gastrennvorrichtung genauso aufgebaut und arbeitet genauso wie die in Figur 2 dargestellte und zuvor beschriebene Vorrichtung, so daß weitere Erläuterungen entbehrlich erscheinen.

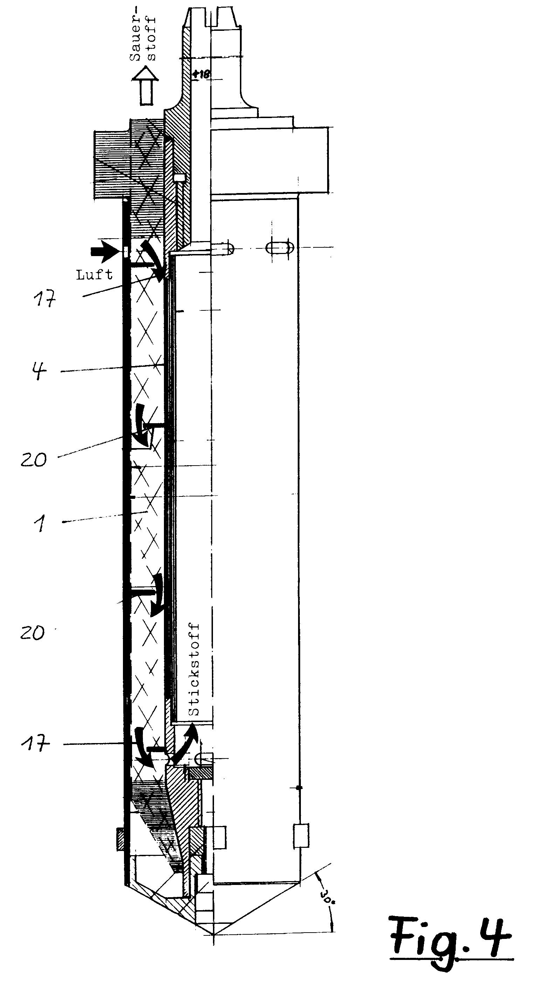

Figur 4 zeigt eine weitere Ausführungsform einer Gastrennvorrichtung, die einen Hohlfadenmodul enthält, der aus einem Wickelkörper hergestellt wurde, der nach einer weiteren Ausgestaltungsform des Verfahrens hergestellt wurde. Diese Vorrichtung ist wie die in Figur 2 dargestellte und zuvor beschriebene Gastrennvorrichtung aufgebaut und arbeitet auch wie diese mit einer einzigen Ausnahme, die nachfolgend näher erläutert wird. Die Ausführungsform gemäß Figur 4 weist vier über die Länge des Hohlfadenwickelköprers verteilt angeordnete Umlenkwände 20 auf, die ein Umlenken des durch den extrakapillaren Raum des Hohlfadenwickelkörpers strömenden Gasgemisches, also des Feed-Gases, und damit eine bessere Stoffübertragung bewirken (s. Pfeile 17). Diese Umlenkwände 20 können beispielsweise dadurch erhalten werden, daß während der Herstellung des Hohlfadenwickelkörpers an den Stellen, an denen Umlenkwände 20 gebildet werden sollen, ständig ein Reaktionsharz, Kleber o.dgl. zugegeben wird. Die Umlenkwände 20 sind ringförmig ausgebildet, wobei abwechselnd eine Umlenkwand 20 mit einem Außendurchmesser, der dem Außendurchmesser des Hohlfadenwickelkörpers entspricht, und einem Innendurchmesser, der größer als der Innendurchmesser des Hohlfadenwickelkörpers bemessen ist, und eine Umlenkwand 20, deren Außendurchmesser kleiner als der Außendurchmesser des Hohlfadenwickelkörpers bemessen ist, und einem Innendurchmesser, der dem Innendurchmesser des Hohlfadenwickelkörpers, also dem Außendurchmesser des Kernrohrs 4, entspricht, angeordnet ist. Die Umlenkwände 20 bewirken wie Umlenkbleche, daß das die Hohlfäden 1 umströmende Gasgemisch und das in den Hohlfäden 1 strömende Gasgemisch bei dieser Ausführungsform im Kreuz-Gegen-Strom zueinander fließen.

Die in den Figuren 2 bis 4 dargestellten Gastrennvorrichtungen wurden im wesentlichen am Beispiel des Auftrennens von Luft in ein sauerstoffreiches und ein stickstoffreiches Gasgemisch beschrieben und erläutert. Es versteht sich jedoch von selbst, daß solche Vorrichtungen je nach Art der verwendeten Hohlfäden auch bei anderen Stofftrenn- bzw. -übertragungsverfahren, aber auch zur Wärmeübertragung eingesetzt werden können. Bei der Verwendung zur Wärmeübertragung werden in der Regel die Hohlfäden an beiden Enden des Hohlfadenwickelkörpers, nachdem sie in eine aushärtbare Vergußmasse eingebettet wurden, geöffnet, so daß das Innere (Lumen) der Hohlfäden frei durchströmt werden kann. Die Verwendung derartiger Hohlfadenmodule zur Wärmeübertragung ist an sich bekannt und wird daher hier nicht näher beschrieben. Auch die zur Wärmeübertragung vorgesehenen Hohlfadenmodule können eine oder mehrere Trennwände 19, wie in Figur 3 dargestellt, oder Umlenkwände 20, wie in Figur 4 dargestellt, aufweisen.

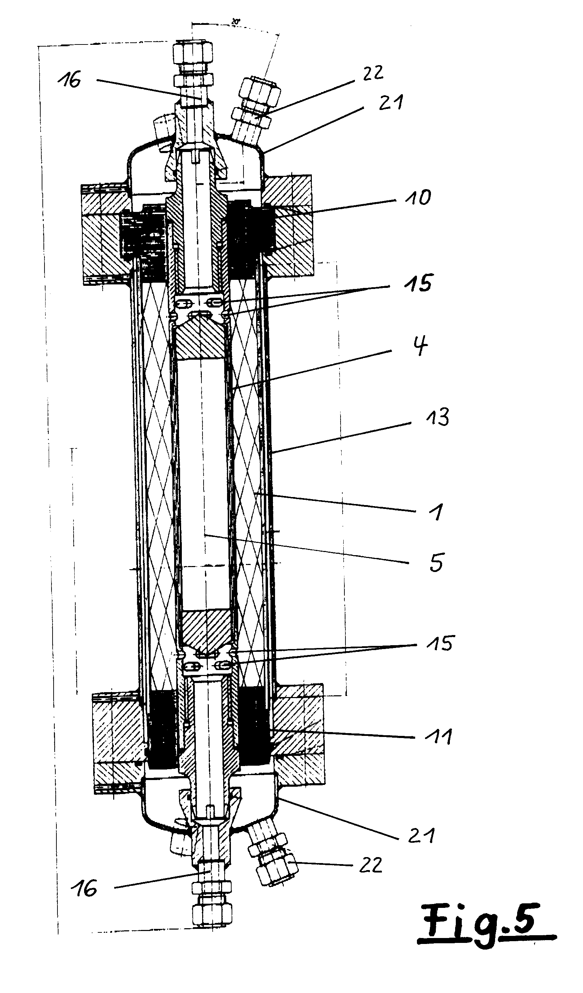

Figur 5 zeigt eine Vorrichtung, die eine Ausführungsform eines Hohlfadenmoduls enthält, bei welchem die Hohlfäden 1 auf beiden Seiten, d.h. sowohl auf der Seite des Vergußmassekörpers 10 als auch auf der Seite des Vergußmassekörpers 11, geöffnet sind. Beide Gehäusedeckel 21 der Vorrichtung weisen einen Anschlußstutzen 22 für das Fluid auf, welches das Innere (Lumen) der Hohlfäden 1 durchströmt bzw. durchströmt hat. Auch diese Vorrichtung eignet sich als Gastrennvorrichtung, aber auch - bei geeigneter Auswahl der Hohlfäden - als Wärmetauscher, Filter für für andere Stofftrenn-, austausch- bzw. -übertragungsverfahren. Bei diesen Verfahren kann die Vorrichtung sowohl in Gegenstrom- als auch in Gleichstromfahrweise eingesetzt werden. Da es sich bei dieser Vorrichtung bis auf den erfindungsgemäß hergestellten Hohlfadenwickelkörper um eine an sich bekannte Vorrichtung handelt, werden die übrigen Teile dieser Vorrichtung hier nicht näher beschrieben und erläutert.

Folgende Positionszahlen bezeichnen folgende Teile:
- 1: Hohlfaden; Hohlfäden
- 2: Erste Windung(en)
- 3: Zweite Windung(en)
- 4: Körper; zu bewickelnder Körper; Kernrohr
- 5: Längsachse des Körpers usw. 4
- 6: Erster Endabschnitt des Körpers usw. 4
- 7: Zweiter Endabschnitt des Körpers usw. 4
- 8: Fadenführungseinrichtung
- 9: Drehrichtungspfeil
- 10: Oberer Vergußmassekörper
- 11: Unterer Vergußmassekörper
- 12: Stirnfläche des oberen Vergußmassekörpers 10
- 13: Mantelrohr
- 14: Eintrittsöffnungen im Mantelrohr 13
- 15: Durchtrittsöffnungen im Kernrohr 4
- 16: Austrittsstutzen; Eintrittsstutzen
- 17: Pfeil für Strömungsrichtung
- 18: Pfeil für Strömungrichtung
- 19: Trennwand
- 20: Umlenkwand; Umlenkwände
- 21: Gehäusedeckel
- 22: Anschlußstutzen

## Patentansprüche

1. Verfahren zum Herstellen eines Hohlfadenwickelkörpers zum Herstellen eines Hohlfadenmoduls, bei welchem wenigstens ein Hohlfaden (1) mit einer changierenden Fadenführungseinrichtung (8) in mehreren Lagen in Form von Windungen auf einen zylindrischen, rohrförmigen, vielflächigen o.dgl. Körper (4) aufgewickelt wird, wobei die Fadenführungseinrichtung (8) im wesentlichen parallel zur Längsachse (5) des Körpers (4) hin- und herbewegt wird, während der Körper (4) um seine Längsachse (5) gedreht wird, so daß die Windungen mit der Längsachse (5) des Körpers (4) einen Winkel bilden, dadurch gekennzeichnet, daß die Drehgeschwindigkeit (Drehzahl) des Körpers (4) und die Changiergeschwindigkeit der Fadenführungseinrichtung (8) so aufeinander abgestimmt werden, daß pro Lage zwischen den Endabschnitten (6; 7) des Körpers (4) eine Vielzahl nebeneinanderliegender erster Windungen (2) gebildet wird, die mit der Längsachse (5) des Körpers (4) einen Winkel α₁ bilden, und daß einander benachbarte erste Windungen (2) derselben Lage im wesentlichen parallel zueinander und in geringen seitlichen Abständen voneinander und benachbarte erste Windungen (2) aufeinanderfolgender Lagen in einem Kreuzungswinkel 2.α₁ zueinander angeordnet werden, und daß nach jedem Bilden einer ersten Hohlfadenwindung (2) vorübergehend die Drehgeschwindigkeit (Drehzahl) des Körpers (4) erhöht und/oder die Changiergeschwindigkeit der Fadenführungseinrichtung (8) - ggf. bis zum Stillstand - verringert wird, um jeweils eine zweite Hohlfadenwindung (3) auf dem ersten oder dem zweiten Endabschnitt (6; 7) des Körpers (4) zu bilden, die mit der Längsachse (5) des Körpers (4) einen Winkel α₂ bildet, der größer als α₁ ist.

2. Verfahren nach Anspruch 1, dadurch gekennzeichnet, daß die Drehgeschwindigkeit des Körpers (4) und die Changiergeschwindigkeit der Fadenführungseinrichtung (8) so aufeinander abgestimmt werden, daß α₁ im Bereich von 0° bis 45° und α₂ im Bereich von 45° bis 90° liegt.

3. Verfahren nach Anspruch 1 oder 2, dadurch gekennzeichnet, daß die Wegstrecke (Hublänge) der Fadenführungseinrichtung (8) - ggf. nach jedem Hub oder Doppelhub - geringfügig nach beiden Seiten vergrößert wird.

4. Verfahren nach wenigstens einem der Ansprüche 1 bis 3, dadurch gekennzeichnet, daß wenigstens einmal während einer Drehung des Körpers (4) von wenigstens 360° ein Stück Folie (19) o.dgl. zugeführt wird, das sich in Längsrichtung des Hohlfadenwickelkörpers von einem Endabschnitt (6 oder 7) des Körpers (4) bis kurz vor den anderen Endabschnitt (7 oder 6) des Körpers (4) erstreckt, so daß die Folie (19) o.dgl. in dem genannten Bereich den bereits zuvor gebildeten Hohlfadenwickelkörper um wenigstens 360° umschließt.

5. Verfahren nach wenigstens einem der Ansprüche 1 bis 4, dadurch gekennzeichnet, daß an wenigstens einer Stelle zwischen den Endabschnitten (6; 7) des Körpers (4) ein Reaktionsharz, Kleber o.dgl. in Umfangsrichtung des Hohlfadenwickelkörpers aufgetragen wird, so daß wenigstens ein ringförmiges Element (20) gebildet wird, das sich nicht über die gesamte Dicke des Hohlfadenwickelkörpers, in radialer Richtung gemessen, erstreckt, welches als Umlenkwand (20) für das die Hohlfäden (1) umströmende Fluid wirkt.

6. Verfahren nach wenigstens einem der Ansprüche 1 bis 5, dadurch gekennzeichnet, daß durch Aufbringen eines Reaktionsharzes, Klebers o.dgl. im Bereich der Endabschnitte (6; 7) des Körpers (4) das Einbetten der Endbereiche der Hohlfäden (1), also im wesentlichen der zweiten Windungen (2), schon während des Wickelvorgangs durchgeführt wird.

7. Verfahren nach wenigstens einem der Ansprüche 1 bis 6, dadurch gekennzeichnet, daß der Winkel α₁ verändert wird, so daß innerhalb des Hohlfadenwickelkörpers ein unterschiedlicher Füllgrad, also eine unterschiedliche Hohlfadendichte, erreicht wird.
